# EUROPEAN PATENT APPLICATION

(11) **EP 4 414 054 A1**
(43) Date of publication of application: **14.08.2024**
(21) Application number: 24155038.3
(22) Date of filing: 31.01.2024
(51) Int. Cl.: B01D 53/94, B01J 21/04, B01J 23/46, B01J 35/00, B01J 35/57, F01N 3/10

(54) **TRANSITION METAL INCORPORATED ALUMINA FOR IMPROVED THREE WAY CATALYSTS**

(30) Priority: 09.02.2023 US 202363484066 P; 05.09.2023 US 202363580450 P
(71) Applicant: Johnson Matthey Public Limited Company, London EC4A 4AB (GB)
(72) Inventor: NAGAOKA, Shuhei, Sakura-shi, Tochigi (JP); YILIGUMA, Sakura-shi, Tochigi (JP)
(74) Representative: Boult Wade Tennant LLP

(57) **Abstract**

A three-way catalyst article, and its use in an exhaust system for internal combustion engines, is disclosed. In particular, provided is a catalyst article for treating exhaust gas comprising: a substrate comprising an inlet end and an outlet end with an axial length L; and a first catalytic region on the substrate; wherein the first catalytic region comprises a first PGM component and a first alumina, wherein the first alumina is doped with from 0.01 to less than 5.0 wt.% Ta, based on the total weight of the doped alumina.

## Description

### FIELD OF THE INVENTION

The present invention relates to a catalyzed article useful in treating exhaust gas emissions from gasoline engines.

### BACKGROUND OF THE INVENTION

Internal combustion engines produce exhaust gases containing a variety of pollutants, including hydrocarbons (HCs), carbon monoxide (CO), and nitrogen oxides ("NOₓ"). Emission control systems, including exhaust gas catalytic conversion catalysts, are widely utilized to reduce the amount of these pollutants emitted to atmosphere. A commonly used catalyst for gasoline engine exhaust treatments is the TWC (three way catalyst). TWCs perform three main functions: (1) oxidation of CO; (2) oxidation of unburnt HCs; and (3) reduction of NOₓ.

Despite advances in TWC technology, there remains a need for improved catalytic converters for certain engine platforms that simultaneously improve the performance in cold start stage, give better light off performance, as well as at hot transient stage, give better OSC performance, with wide range of Pt, Pd, and/or Rh applications. This invention solves these problems amongst others.

### SUMMARY OF THE INVENTION

One aspect of the present disclosure is directed to a catalyst article for treating exhaust gas comprising: a substrate comprising an inlet end and an outlet end with an axial length L; and a first catalytic region on the substrate; wherein the first catalytic region comprises a first PGM component and a first alumina, wherein the first alumina is doped with from 0.01 to less than 5.0 wt.% Ta, based on the total weight of the doped alumina.

The invention also encompasses an exhaust gas treatment system for treating a flow of a combustion exhaust gas, the exhaust gas treatment system comprising the catalyst article of the invention.

The invention also encompasses a fuel combustion and exhaust gas treatment system comprising an engine and the exhaust gas treatment system of the invention.

The invention also encompasses a method of treating an exhaust gas from an internal combustion engine, the method comprising contacting the exhaust gas with the catalyst article of the invention.

### BRIEF DESCRIPTION OF THE DRAWINGS

**FIG. 1** shows one embodiment according to the present invention, which contains a first catalytic region with a length of 100% to the axial length L of the substrate (single layer).
**FIG. 2** shows one embodiment according to the present invention, in which the first catalytic region extends 100% of the axial length L, as bottom layer; and the second catalytic region extends 100% of the axial length L, as top layer.

### DETAILED DESCRIPTION OF THE INVENTION

The present invention is directed to the catalytic treatment of combustion exhaust gas, such as that produced by gasoline and other engines, and to related catalysts compositions, catalytic articles, and systems. More specifically, the invention relates to the simultaneous treatment of NOₓ, CO, and HC in a vehicular exhaust system. Although most of technology developments to improve TWC performance have been focused on increasing thermal stability of alumina support materials by doping of lanthanum or other rare earth elements, the inventors have surprisingly discovered that modification of the alumina materials with tantalum may provide a further impact on the improved light-off performance of TWCs and the resulting emission control performance. The inventors have discovered that TWC potential performance under light-off tests as well as substantial performance under emission control tests were improved with this invention. The processes of the present invention may also significantly reduce the PGM loading requirements in TWCs, which can save precious natural resource as well as to reduce the costs of the catalyst products.

One aspect of the present disclosure is directed to a catalyst article for treating exhaust gas comprising: a substrate comprising an inlet end and an outlet end with an axial length L; and a first catalytic region on the substrate; wherein the first catalytic region comprises a first PGM component and a first alumina, wherein the first alumina is doped with from 0.01 to less than 5.0 wt.% Ta, based on the total weight of the doped alumina.

Through intensive research, the inventors have surprisingly found that by doping the first alumina with Ta, and in particular with from 0.01 to less than 5.0 wt.% Ta, based on the total weight of the doped alumina, these novel compositions can demonstrate excellent catalytic properties (*e*.*g*., one or more of the emissions, THC/NMHC, CO and NOₓ emission could be significantly reduced during vehicle testing by using catalyst as described herein). More specifically, doping the alumina with Ta has surprisingly been found to improve the light-off temperature for NOₓ and THC conversion, even more notably after lean-oriented ageing (such as at 1000 °C for 4 hours). This improvement has been noted with respect to reference catalysts comprising La-doped alumina, Ta₂O₅ as the sole support material, and a mix of 87 wt.% La-doped alumina and 13 wt.% Ta₂O₅, each having Rh supported thereon. The Ta-doped sample of the invention may provide higher conversion at all temperatures, but in particular at lower temperatures, i.e. lowering the light-off temperature, for NOₓ and THC. The catalyst comprising Ta₂O₅ as the sole support material notably has significantly lower THC and NOₓ conversion, particularly NOₓ conversion, at higher temperatures.

Slight improvements may also be seen for the catalyst of the invention after redox ageing.

Moreover, surprisingly, the above effects that may be conferred by doping the alumina with Ta may be greater than those conferred by doping alumina with other transition metals, such as Zr, Mo, W, Ti, and/or Nb.

Without wishing to be bound by theory, it is thought that the doping of the Ta into the alumina may increase the hydrothermal stability of the alumina, which can then maintain its interactions with the supported Rh that are beneficial to the NOₓ and THC conversion, even after high-temperature, such as lean-oriented and redox, ageing.

As is conventional in the art, the term "light-off temperature" as used herein may refer to the temperature at which the conversion of a particular pollutant reaches 50%.

Throughout the application, "wt.%" in connection with the dopant is calculated based on metal oxide. In other words, the wt.% of Ta in the first alumina is calculated on the basis of the Ta oxide (Ta₂O₅).

Preferably, the catalyst article is for treating exhaust gas from a gasoline engine. Preferably, the catalyst article is a TWC article.

The term "doped alumina" as used herein may encompass the total material comprising the first alumina, the Ta that is doped into the first alumina and any other further dopant that may be doped into the first alumina.

Preferably, the doped alumina is in the form of a mixed oxide. Alternatively, the doped alumina may be present in the form of a composite oxide.

### First Catalytic Region

The first catalytic region is on the substrate. Unless otherwise indicated, the first catalytic region may be directly disposed on the substrate, i.e. with no intervening material, and/or indirectly disposed on the substrate, i.e. with intervening material. If the substrate is porous, then the catalytic composition may be disposed therein, for example within the pores of the substrate, i.e. wherein the catalytic composition is disposed thereon and/or therein. The catalytic composition is typically disposed on the substrate in the form of a washcoat. The term "washcoat" as used herein is well-known in the field and refers to an adherent coating that is applied to a substrate usually during the production of a catalyst.

Preferably, the first alumina is doped with from 0.1 to less than 5.0 wt.% Ta, more preferably from 0.1 to 4.9 wt.% Ta, even more preferably from 0.1 to 4.5 wt.% Ta, still more preferably from 0.1 to less than 4.5 wt.% Ta, yet still more preferably from 0.1 to 4.4 wt.% Ta, yet still more preferably from 0.2 to 4.0 wt.% Ta, yet still more preferably from 0.2 to 3.5 wt.% Ta, yet still more preferably from 0.2 to 3.0 wt.% Ta, yet still more preferably from 0.2 to 2.5 wt.% Ta, based on the total weight of the doped alumina. In some preferred embodiments, the first alumina is doped with from 0.2 to 2.0 wt.% Ta, based on the total weight of the doped alumina. In some preferred embodiments, the first alumina is doped with from 0.2 to 1.5 wt.% Ta, based on the total weight of the doped alumina. In some preferred embodiments, the first alumina is doped with from 0.2 to 1.0 wt.% Ta, based on the total weight of the doped alumina.

Preferably, the first alumina comprises a further dopant comprising one or more of lanthanum, neodymium, yttrium, niobium, praseodymium, hafnium, molybdenum, titanium, vanadium, zinc, cadmium, copper, silicon, calcium, barium, strontium, caesium, magnesium, potassium and sodium, more preferably one or more of lanthanum, neodymium, praseodymium, hafnium and yttrium, even more preferably lanthanum. Preferably, the further dopant is present in the first alumina in an amount of from 0.01 to 10.0 wt.%, more preferably from 0.1 to 8.0 wt.%, even more preferably from 1.0 to 7.0 wt.%, still more preferably from 2.0 to 6.0 wt.%, yet still more preferably from 3.0 to 6.0 wt.%, based on the total weight of the doped alumina.

Preferably, the first PGM component comprises one or more of platinum, palladium, rhodium, and mixtures or alloys thereof, more preferably the first PGM component comprises Pd and/or Rh, even more preferably the first PGM component comprises Rh, still more preferably the first PGM component consists of Rh. In some embodiments, the first catalytic region is preferably substantially free of PGMs other than Rh.

In certain embodiments, the first alumina preferably comprises gamma alumina. In other embodiments, the first alumina preferably comprises theta alumina.

In certain embodiments, the specific surface area (SSA) of the doped first alumina is preferably 100-220 m²/g, more preferably 120-200 m²/g, and even more preferably 150-180 m²/g, measured by the Brunauer-Emmett-Teller (BET) method. After being hydrothermally aged for 4 hours at 1000 °C under air with 10% steam, in certain embodiments, the SSA of the aged doped first alumina is preferably 30-120 m²/g, more preferably 50-110 m²/g, and even more preferably 60-100 m²/g, measured by BET.

Preferably, the first catalytic region further comprises a first oxygen storage capacity (OSC) material, and/or a first alkali and/or alkali earth metal component.

Preferably, the first OSC material comprises cerium oxide, zirconium oxide, a ceria-zirconia mixed oxide, an alumina-ceria-zirconia mixed oxide, or a combination thereof. More preferably, the first OSC material comprises the ceria-zirconia mixed oxide, the alumina-ceria-zirconia mixed oxide or a combination thereof. Preferably, the ceria-zirconia mixed oxide further comprises dopants, such as lanthanum, neodymium, praseodymium, yttrium oxides, etc. In some embodiments, the first OSC material preferably functions as a support material for the first PGM component (e.g., as the first PGM support material). In some embodiments, the first OSC material preferably comprises the ceria-zirconia mixed oxide and the alumina-ceria-zirconia mixed oxide.

Preferably, the first catalytic region further comprises a first alkali and/or alkaline earth metal.

The first alkali or alkaline earth metal is preferably barium, or strontium, and mixed oxides or composite oxides thereof. Preferably the barium or strontium, where present, is loaded in an amount of from 0.1 to 15 wt.%, and more preferably from 3 to 10 wt.% of barium or strontium, based on the total weight of the first catalytic region.

Preferably the barium or the strontium is present as BaCO₃ or SrCO₃. Such a material can be performed by any method known in the art, for example incipient wetness impregnation or spray-drying.

Preferably, the first PGM component is supported on the first alumina. In other words, the first PGM component is preferably directly supported on the first alumina.

The catalyst article in this aspect can be applied as a TWC catalyst for treating exhaust gas produced by gasoline engines.

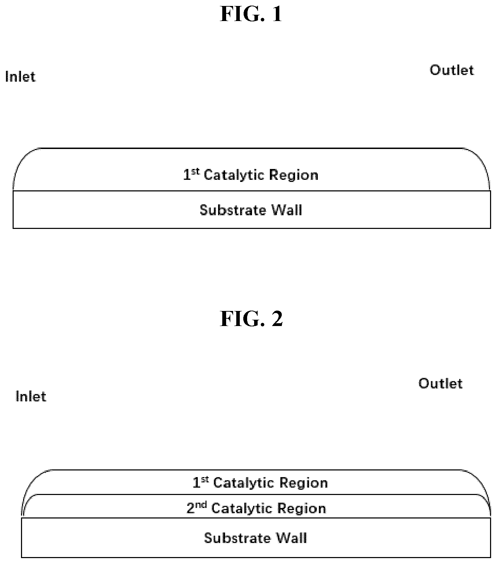

The first catalytic region can extend for 100 percent of the axial length L. (*E.g.*, *see* **FIGs. 1** and **2****)**.

The total washcoat loading of the first catalytic region is preferably less than 3.5 g/in³; more preferably, less than 3.0 g/in³ and even more preferably less than 2.5 g/in³. Alternatively, the total washcoat loading of the first catalytic region is preferably from 0.5 to 3.5 g/in³; more preferably, from 0.6 to 3 g/in³ and even more preferably from 0.7 to 2.5 g/in³.

### Second Catalytic Region

Preferably, the catalyst article further comprises a second catalytic region.

Preferably, the second catalytic region further comprises a second PGM component, a second oxygen storage capacity (OSC) material, a second alkali and/or alkaline earth metal component, and/or a second inorganic oxide.

The second PGM component preferably comprises one or more of platinum, palladium, rhodium, and mixtures or alloys thereof. In some embodiments, the second PGM component preferably comprises Pd, Pt or a mixture or alloy thereof.

Preferably, the second OSC material comprises cerium oxide, zirconium oxide, a ceria-zirconia mixed oxide, an alumina-ceria-zirconia mixed oxide, or a combination thereof. More preferably, the second OSC material comprises the ceria-zirconia mixed oxide, the alumina-ceria-zirconia mixed oxide, or a combination thereof. In addition, the second OSC material preferably further comprises one or more of dopants like lanthanum, neodymium, praseodymium, yttrium etc. Moreover, the second OSC material preferably has the function as a support material for the second PGM component. In some embodiments, the second OSC material preferably comprises the ceria-zirconia mixed oxide and the alumina-ceria-zirconia mixed oxide.

The ceria-zirconia mixed oxide preferably has a weight ratio of zirconia to ceria of at least 50:50; preferably, higher than 60:40; more preferably, higher than 70:30. Alternatively, the ceria-zirconia mixed oxide also can have a weight ratio of ceria to zirconia less than 50:50, preferably, less than 40:60, more preferably, less than 30:70.

The second catalytic region preferably comprises the second OSC material (e.g., ceria-zirconia mixed oxide) in an amount of from 10 to 90 wt.%; preferably, 25-75 wt.%; more preferably, 30-60 wt.%, based on the total washcoat loading of the second catalytic region.

The second OSC material loading in the second catalytic region is preferably less than 2 g/in³. In some embodiments, the second OSC material loading in the second catalytic region is preferably no greater than 1.5 g/in³, more preferably no greater than 1.2 g/in³, even more preferably no greater than 1 g/in³, still more preferably no greater than 0.8 g/in³, and yet still more preferably no greater than 0.7 g/in³.

The second alkali or alkaline earth metal is preferably barium, strontium, mixed oxides or composite oxides thereof. Preferably the barium or strontium, where present, is in an amount of from 0.1 to 15 wt.%, and more preferably from 3 to 10 wt.% of barium or strontium, based on the total weight of the second catalytic region.

It is even more preferable that the second alkali or alkaline earth metal is strontium. The strontium, where present, is preferably present in an amount of from 0.1 to 15 wt.%, and more preferably 3 to 10 wt.%, based on the total weight of the second catalytic region.

It is also preferable that the second alkali or alkaline earth metal comprises a mixed oxide or composite oxide of barium and strontium. Preferably, the mixed oxide or composite oxide of barium and strontium is present in an amount of from 0.1 to 15 wt.%, and more preferably from 3 to 10 wt.%, based on the total weight of the second catalytic region. It is more preferable that the second alkali or alkaline earth metal is a composite oxide of barium and strontium.

Preferably the barium or strontium is present as BaCO₃ or SrCO₃. Such a material can be performed by any method known in the art, for example incipient wetness impregnation or spray-drying.

The second inorganic oxide is preferably an oxide of Groups 2, 3, 4, 5, 13 and 14 elements. The second inorganic oxide is preferably selected from the group consisting of alumina, magnesia, silica, zirconia, barium oxides, and mixed oxides or composite oxides thereof. Particularly preferably, the second inorganic oxide is alumina, lanthania-alumina, zirconia, or a silica/alumina composite oxide. More preferably, the second inorganic oxide is alumina, lanthania-alumina, or a silica/alumina composite oxide. One especially preferred second inorganic oxide is alumina or lanthania-alumina. In some embodiments, the second inorganic oxide is lanthania-alumina (e.g., lanthanum stabilized alumina), wherein lanthania is up to 10 wt.%, preferably, 2-8, 3-7, or 4-6 wt.% of the second inorganic oxide.

In some embodiments, the second inorganic oxide is doped with a second dopant of at least 5 wt.%, and wherein the second dopant is selected from the group consisting of Zr, Ta, Mo, W, Ti, Nb, and a combination thereof. In further embodiments, the second dopant can be selected from the group consisting of Zr, Ta, Ti, Nb, and a combination thereof. In yet further embodiments, the second dopant can be Ti, Nb, or a combination thereof. In yet another further embodiment, the second dopant can be Ti or Nb. In certain embodiments, the second dopant can be Ti. In other embodiments, the second dopant can be Nb. In certain embodiments, the second dopant content in the second inorganic oxide (such as alumina) can be 5 wt. %-90 wt. %. In some further embodiments, the second dopant content in the second inorganic oxide can be 5 wt. %-20 wt. %. In other further embodiments, the second dopant content in the second inorganic oxide can be 20 wt. %-80 wt. %.

Preferably, the total washcoat loading of the second catalytic region is less than 3.5 g/in³; more preferably, less than 3.0 g/in³ and even more preferably less than2.5 g/in³. Alternatively, the total washcoat loading of the first catalytic region is preferably from 0.5 to 3.5 g/in³; more preferably, from 0.6 to 3 g/in³ and even more preferably from 0.7 to 2.5 g/in³.

The second catalytic region can extend for 100 percent of the axial length L. (*E.g.*, *see* **FIG. 2****)**

In some embodiments, the first catalytic region is preferably supported/deposited directly on the substrate and then the second catalytic region is preferably supported/deposited directly on the first catalytic region. In certain embodiments, the second catalytic region is preferably supported/deposited directly on the substrate and then the first catalytic region is preferably supported/deposited directly on the second catalytic region.

The catalyst article of the invention may comprise further components that are known to the skilled person. For example, the compositions of the invention may further comprise at least one binder and/or at least one surfactant as required. Where a binder is present, dispersible alumina binders are preferred.

### Substrate

Preferably the substrate is a flow-through monolith. Alternatively, the substrate can be a wall-flow filter.

The flow-through monolith substrate may comprise a first face and a second face defining a longitudinal direction there between. The flow-through monolith substrate may have a plurality of channels extending between the first face and the second face. The plurality of channels may extend in the longitudinal direction and provide a plurality of inner surfaces (e.g. the surfaces of the walls defining each channel). Each of the plurality of channels may have an opening at the first face and an opening at the second face. For the avoidance of doubt, the flow-through monolith substrate is not a wall flow filter.

The first face may typically be at an inlet end of the substrate and the second face may be at an outlet end of the substrate.

The channels may be of a constant width and each plurality of channels may have a uniform channel width.

Preferably within a plane orthogonal to the longitudinal direction, the monolith substrate has from 300 to 900 channels per square inch, preferably from 400 to 800. For example, on the first face, the density of open first channels and closed second channels is preferably from 600 to 700 channels per square inch. The channels can have cross sections that are rectangular, square, circular, oval, triangular, hexagonal, or other polygonal shapes.

The monolith substrate may act as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (i.e. a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

Another aspect of the present disclosure is directed to an exhaust gas treatment system for treating a flow of a combustion exhaust gas, the exhaust gas treatment system comprising the catalyst article of the first aspect. All preferred embodiments and features described herein in relation to the first aspect apply equally to this aspect.

Another aspect of the invention is directed to a fuel combustion and exhaust gas treatment system comprising an engine and the exhaust gas treatment system of the above aspect. Preferably, the engine is a gasoline engine. All preferred embodiments and features described herein in relation to the first aspect apply equally to this aspect.

Another aspect of the present disclosure is directed to a method of treating an exhaust gas from an internal combustion engine, the method comprising contacting the exhaust gas with the catalyst article of the first aspect.

### DEFINTIONS

The term "article" or "catalyst article" as used herein may encompass an article in which a catalyst is supported thereon or therein. The article may take the form of, for example, a honeycomb monolith, or a filter, e.g. a wall flow filter or a flow-through filter.

The term "inlet end" as used herein may encompass the end of the substrate that is intended to be placed in the upstream direction. By contrast, the term "outlet end" as used herein may encompass the end of the substrate that is intended to be placed in the downstream direction. The term "upstream" as used herein indicates a direction in the system towards the source of the exhaust gas. By contrast, the term "downstream" as used herein indicates a direction in the system away from the source of the exhaust gas.

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10 %, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (*e*.*g*., region) where the difference in composition when comparing one part of the region with another part of the region is 5% or less, usually 2.5% or less, and most commonly 1% or less.

The term "zone" as used herein refers to a region having a length that is less than the total length of the substrate, such as ≤ 75 % of the total length of the substrate. A "zone" typically has a length (*i.e.* a substantially uniform length) of at least 5% (*e.g.* ≥ 5 %) of the total length of the substrate.

The total length of a substrate is the distance between its inlet end and its outlet end (*e.g.* the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:
(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:
(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The expression "consist essentially" as used herein limits the scope of a feature to include the specified materials or steps, and any other materials or steps that do not materially affect the basic characteristics of that feature, such as for example minor impurities. The expression "consist essentially of' embraces the expression "consisting of'.

The expression "substantially free of' as used herein with reference to a material, typically in the context of the content of a region, a layer or a zone, means that the material in a minor amount, such as ≤ 5 % by weight, preferably ≤ 2 % by weight, more preferably ≤ 1 % by weight, even more preferably ≤ 0.5 % by weight, still more preferably ≤ 0.1 % by weight and yet still more preferably ≤ 0.01 % by weight. The expression "substantially free of" embraces the expression "does not comprise".

The term "loading" as used herein refers to a measurement in units of g/ft³ on a metal weight basis.

Unless otherwise specified or implied, the use of the terms "first", "second", etc. is intended only as a label, and is not intended to indicate the relative position or location of the particular feature.

The following examples merely illustrate the invention. Those skilled in the art will recognize many variations that are within the spirit of the invention and scope of the claims.

### EXAMPLES

### Materials

All materials are commercially available and were obtained from known suppliers, unless noted otherwise.

Generally, commercially available La-stabilized γ-Al₂O₃ or Ta-doped La-stabilized γ-Al₂O₃ with surface area of about 170-200 m²/g and Nd-stabilized zirconia with surface area of about 80 m²/g were used as Al₂O₃ and ZrO₂ support materials, respectively.

Tantalum pentoxide with surface area of about 5 m²/g was used in one of the comparative catalysts in replacement of La-stabilized γ-Al₂O₃.

### EXAMPLE 1: LIGHT OFF PERFORMANCES IN SYNTHETIC CATALYST ACTIVITY TEST FOR TA-USED SUPPORT MATERIALS

### Comparative Catalyst A

Comparative Catalyst A is a single-layered TWC coated on a ceramic substrate (400 cpsi, 4.0 mil wall thickness). The catalyst layer consists of Rh supported on a washcoat of La-stabilized alumina and Nd-stabilized zirconia where Rh was prefixed on the alumina support. The washcoat loading was about 2.0 g/in³ with a Rh loading of 2 g/ft³.

### Comparative Catalyst B

Comparative Catalyst B is a single-layered TWC coated on a ceramic substrate (400 cpsi, 4.0 mil wall thickness). The catalyst layer consists of Rh supported on a washcoat of tantalum pentoxide and Nd-stabilized zirconia where Rh was prefixed on the tantalum pentoxide support. The washcoat loading was about 2.0 g/in³ with a Rh loading of 2 g/ft³.

### Catalyst C

Catalyst C is a single-layered TWC coated on a ceramic substrate (400 cpsi, 4.0 mil wall thickness). The catalyst layer consists of Rh supported on a washcoat of 5 wt.% Ta-doped La-stabilized alumina and Nd-stabilized zirconia where Rh was prefixed on the 5 wt.% Ta-doped La-stabilized alumina support. The washcoat loading was about 2.0 g/in³ with a Rh loading of 2 g/ft³.

Comparative Catalysts A and B, and Catalyst C were tested separately over a Synthetic Catalyst Activity Test (SCAT) device. The light off performance was tested in a gas flow of 10 vol.% H₂O + 15 vol.% CO₂ + 1260ppmC C₃H₆ + 0.2 vol.% H₂ + 0.6 vol.% CO + 0.53 vol.% O₂ + 1000ppm NO balanced with N₂ (the space velocity was 60000 h⁻¹), and temperature ramp is 30 °C/min. The conversion of THC, CO and NOₓ were calculated from comparing the concentration of the feed gas and the gas at the outlets of the catalysts. A series of Comparative Catalysts A and B, and Catalyst C were hydrothermal aged for 4 hours at 1000 °C under a perturbated gas flows of 10 vol.% H₂O + 0.125 vol.% C₃H₆ and 10 vol.% H₂O + 20 vol.% O₂ balanced with N₂. The space velocity was 4 L min⁻¹ and perturbation cycle was 60 s for each type of gas flow and shutdown was under 100% N₂.

The HC and NOₓ T₅₀ light off temperatures of the aged Comparative Catalysts A and B, and Catalyst C are shown in **Table 1**. The data indicate that, surprisingly, Catalyst C (with 5 wt.% Ta-doped La-stabilized alumina and Nd-stabilized zirconia support) of the present invention gave significantly improved light-off performance when compared with Comparative Catalysts A (with La-stabilized alumina and Nd-stabilized zirconia support) and B (with tantalum pentoxide and Nd-stabilized zirconia support). The impact to the light off performance improvement was about 65 °C and 44 °C lower T₅₀ (T₅₀ is the temperature when the conversion reaching 50%) for HC and NOₓ, respectively, with Catalyst C of 5 wt.% Ta-doped La-stabilized alumina as compared to Comparative Catalyst A. Comparative Catalyst B showed much lower T₅₀ of 58 °C for HC, however, higher T₅₀ for CO and NOₓ conversions than Comparative Catalyst A. It demonstrated that Ta doping to La-stabilized alumina can significantly benefit the Rh TWC catalytic performance.

**Table 1: SCAT Light Off Test Results**

| | T₅₀ (°C) | |
|---|---|---|
| | HC | NOₓ |
| Comparative Catalyst A | 551 | 559 |
| Comparative Catalyst B | 493 | - |
| Catalyst C | 486 | 515 |

### EXAMPLE 2: LIGHT OFF PERFORMANCES IN SYNTHETIC CATALYST ACTIVITY TEST FOR TA-DOPED ALUMINA WITH DIFFERENT TA DOPING AMOUNTS

### Comparative Catalyst D

Comparative Catalyst D is a single-layered TWC coated on a ceramic substrate (400 cpsi, 4.0 mil wall thickness). The catalyst layer consists of Rh supported on a washcoat of La-stabilized alumina and Nd-stabilized zirconia where Rh was prefixed on the alumina support. The washcoat loading was about 2.0 g/in³ with a Rh loading of 2 g/ft³.

### Catalyst E

Catalyst E is a single-layered TWC coated on a ceramic substrate (400 cpsi, 4.0 mil wall thickness). The catalyst layer consists of Rh supported on a washcoat of 0.2 wt.% Ta-doped La-stabilized alumina and Nd-stabilized zirconia where Rh was prefixed on the 0.2 wt.% Ta-doped La-stabilized alumina support. The washcoat loading was about 2.0 g/in³ with a Rh loading of 2 g/ft³.

### Catalyst F

Catalyst F is a single-layered TWC coated on a ceramic substrate (400 cpsi, 4.0 mil wall thickness). The catalyst layer consists of Rh supported on a washcoat of 1 wt.% Ta-doped La-stabilized alumina and Nd-stabilized zirconia where Rh was prefixed on the 1 wt.% Ta-doped La-stabilized alumina support. The washcoat loading was about 2.0 g/in³ with a Rh loading of 2 g/ft³.

### Catalyst G

Catalyst G is a single-layered TWC coated on a ceramic substrate (400 cpsi, 4.0 mil wall thickness). The catalyst layer consists of Rh supported on a washcoat of 5 wt.% Ta-doped La-stabilized alumina and Nd-stabilized zirconia where Rh was prefixed on the 5 wt.% Ta-doped La-stabilized alumina support. The washcoat loading was about 5.0 g/in³ with a Rh loading of 2 g/ft³.

### Catalyst H

Catalyst H is a single-layered TWC coated on a ceramic substrate (400 cpsi, 4.0 mil wall thickness). The catalyst layer consists of Rh supported on a washcoat of 10 wt.% Ta-doped La-stabilized alumina and Nd-stabilized zirconia where Rh was prefixed on the 10 wt.% Ta-doped La-stabilized alumina support. The washcoat loading was about 5.0 g/in³ with a Rh loading of 2 g/ft³.

Comparative Catalyst D, and Catalysts E ~ H were tested separately over a Synthetic Catalyst Activity Test (SCAT) device after hydrothermal aged for 4 hours at 1000 °C under a perturbated gas flows of 10 vol.% H₂O + 0.125 vol.% C₃H₆ and 10 vol.% H₂O + 20 vol.% O₂ balanced with N₂. The space velocity was 4 L min⁻¹ and perturbation cycle was 60 s for each type of gas flow and shutdown was under 100% N₂.

The HC and NOₓ T₅₀ light off temperatures of the aged Comparative Catalyst D and Catalysts E ~ H are shown in **Table 2**. The data indicate that, surprisingly, Ta-doped La-stabilized alumina TWC Catalysts E ~ G (with Ta doping amount 0.2, 1, 5 wt.%, respectively) of the present invention gave significantly improved light-off performance for HC and NOₓ conversion when compared with Comparative Catalyst D (with Ta-free La-stabilized alumina support). Catalyst H (with 10 wt.% Ta doped La-stabilized alumina support) showed higher T50 for HC and NOₓ conversion than Comparative Catalyst D. Among Catalysts E ~ G, Catalysts E (with 0.2 wt.% Ta doped La-stabilized alumina) and F (with 1 wt.% Ta doped La-stabilized alumina) showed resembling light-off performance for HC and NOₓ conversion which were better than those of Catalyst G (with 5 wt.% Ta doped La-stabilized alumina). T50 for HC and NOₓ with Catalyst E were 25 °C and 35 °C lower than those of Comparative Catalyst D. This indicates low amount of Ta doping 0.2 ~ 1 wt.% is better than high Ta doping for improving Rh TWC performance compared to commonly used Ta-free La-stabilized alumina support. This invention can save precious natural resource of Rh used in automotive industry as well as can provide cleaner-air environment through significant performance improvement of TWC to reduce air-pollutions by automobiles.

**Table 2: SCAT Light Off Test Results**

| | T₅₀ (°C) | |
|---|---|---|
| | HC | NOₓ |
| Comparative Catalyst D | 541 | 544 |
| Catalyst E | 516 | 509 |
| Catalyst F | 515 | 509 |
| Catalyst G | 521 | 522 |
| Catalyst H | 543 | 561 |

## Claims

1. A catalyst article for treating exhaust gas comprising:
a substrate comprising an inlet end and an outlet end with an axial length L; and
a first catalytic region on the substrate;
wherein the first catalytic region comprises a first PGM component and a first alumina,
wherein the first alumina is doped with from 0.01 to less than 5.0 wt.% Ta, based on the total weight of the doped alumina.

2. The catalyst article of claim 1, wherein the first alumina is doped with from 0.1 to less than 5.0 wt.% Ta, based on the total weight of the doped alumina.

3. The catalyst article of claim 1 or claim 2, wherein the first alumina comprises a further dopant comprising one or more of lanthanum, neodymium, yttrium, niobium, praseodymium, hafnium, molybdenum, titanium, vanadium, zinc, cadmium, copper, silicon, calcium, barium, strontium, caesium, magnesium, potassium and sodium, preferably one or more of lanthanum, neodymium, praseodymium, hafnium and yttrium.

4. The catalyst article of claim 3, wherein the further dopant comprises lanthanum.

5. The catalyst article of any one of the preceding claims, wherein the first PGM component comprises Rh, preferably wherein the first PGM component consists of Rh.

6. The catalyst article of claim 5, wherein the first catalytic region is substantially free of PGMs other than Rh.

7. The catalyst article of any one of the preceding claims, wherein the first catalytic region further comprises a first oxygen storage capacity (OSC) material, and/or a first alkali and/or alkali earth metal component.

8. The catalyst article of any one of the preceding claims, wherein the first PGM component is supported on the first alumina.

9. The catalyst article of any one of the preceding claims, further comprising a second catalytic region.

10. The catalyst article of claim 9, wherein the second catalytic region comprises a second PGM component.

11. The catalyst article of claim 10, wherein the second PGM component comprises one or more of Pt, Pd, Rh, and mixtures or alloys thereof.

12. The catalyst article of any one of claims 9-11, wherein the second catalytic region further comprises a second oxygen storage capacity (OSC) material, a second alkali and/or alkali earth metal component, and/or a second inorganic oxide.

13. The catalyst article of any one of claims 9-12, wherein the second catalytic region is supported/deposited directly on the substrate.

14. The catalyst article of any one of claims 9-12, wherein the first catalytic region is supported/deposited directly on the substrate.

15. An exhaust gas treatment system for treating a flow of a combustion exhaust gas, the exhaust gas treatment system comprising the catalyst article of any one of claims 1-14.

16. A method of treating an exhaust gas from an internal combustion engine, the method comprising contacting the exhaust gas with the catalyst article of any one of claims 1-14.
